# EUROPÄISCHE PATENTSCHRIFT

(11) **EP 3 314 042 B1**
(45) Veröffentlichungstag und Bekanntmachung des Hinweises auf die Patenterteilung: **14.10.2020**
(21) Anmeldenummer: 16733407.7
(22) Anmeldetag: 24.06.2016
(51) Int. Cl.: C25B 15/08, C10L 3/08, C25B 1/04, F01K 13/00

(54) **ENERGIEERZEUGUNG MITTELS BIOSYNTHETISCHER VERFAHREN**
ENERGY PRODUCTION BY MEANS OF A BIOSYNTHETIC METHOD
PRODUCTION D'ÉNERGIE PAR DES PROCÉDÉS DE BIOSYNTHÈSE

(30) Priorität: 25.06.2015 EP 15173801; 21.08.2015 EP 15181898
(43) Veröffentlichungstag der Anmeldung: 02.05.2018
(73) Patentinhaber: Südzucker AG, 68165 Mannheim (DE)
(72) Erfinder: BERNARD, Jörg, 67283 Albsheim (DE); LORENZ, Frieder, 97342 Obernbreit (DE); KUNZ, Markwart, 38106 Braunschweig (DE)
(74) Vertreter: Schrell, Andreas
(86) Internationale Anmeldenummer: PCT/EP2016/064637
(87) Internationale Veröffentlichungsnummer: WO 2016/207330

(56) Entgegenhaltungen:
- WO-A1-2013/029701
- WO-A1-2015/010895
- DE-A1-102009 018 126
- DE-A1-102012 214 907

## Beschreibung

Die vorliegende Erfindung betrifft ein System und ein Verfahren zur Herstellung mindestens eines Stoffes aus mindestens einem Ausgangsmaterial mittels elektrischer Energie, sowie ein Verfahren zum Betreiben einer Umwandlungseinrichtung zur Umsetzung mindestens eines Ausgangsmaterials mittels elektrischer Energie zu mindestens einem Stoff.

Der Einsatz von Strom, insbesondere auch von erneuerbarem Strom, also Strom aus zum Beispiel Windkraft- oder Photovoltaikanlagen, zur Herstellung von Stoffen mittels Elektrolyse ist bekannt. Bekannt ist es auch, aus Wasser elektrolytisch Wasserstoff zu gewinnen. Schließlich ist es bekannt, CO₂, welches aus der Vergärung von Biomaterial stammen kann, mit aus elektrolytischen Prozessen stammendem Wasserstoff zu Methanol umzusetzen.

Der zunehmende Anteil fluktuierender, aus erneuerbaren Energien stammender Energieflüsse insbesondere in regionalen Stromnetzen führt zu einer zunehmenden Komplexität und beeinträchtigt einen sicheren Betrieb des Stromversorgungssystems. Als problematisch stellt sich insbesondere die Bereitstellung einer akzeptablen Stromnetzstabilität dar. So leidet auch die Versorgung von Elektrolyseanlagen mit Strom aus öffentlichen Stromnetzen, insbesondere aus mit regenerierbarer Energie gespeisten Stromnetzen, unter zeitweise erheblichen Stromschwankungen. Es kann zu deutlichen Überschussstrommengen und einer weiten Spreizung zwischen Basis- und Spitzenstrom kommen, die häufig eine nur ineffektive Nutzung von Elektrolyseanlagen mit sich bringt. Die im Stand der Technik bekannten Elektrolyse-basierten Anlagen und Verfahren zur Gewinnung von wirtschaftlich oder technologisch interessanten Stoffen, zum Beispiel Methanol oder Methan, aus Biomaterial, beispielsweise Getreide, Zucker, Stärke oder aus sonstigen Quellen sind daher hinsichtlich ihrer Wirtschaftlichkeit verbesserungsfähig.

DE 10 2012 214 907 offenbart ein Verfahren zum Betrieb einer Dampfkraftanlage zur Erzeugung von elektrischer Energie mittels eines Verbrennungsprozesses nach dem Oxyfuel-Verfahren und eines Dampfprozesses sowie eine solche Dampfkraftanlage. WO 2013/029701 offenbart ein Energieversorgungssystem umfassend einen elektrischen Energieversorger, mindestens eine Elektrolyseanlage, mindestens einen chemischen Reaktor, mindestens einen Tank und mindestens einen Umwandler. DE 10 2009 018 126 offenbart ein Energieversorgungssystem mit einer Stromerzeugungseinrichtung zur regenerativen Erzeugung von in ein Stromversorgunsgnetz einspeisbarer elektrischer Energie und ein Betriebsverfahren für ein derartiges Energieversorgungssystem.

Der vorliegenden Erfindung liegt daher das technische Problem zugrunde, die vorgenannten Nachteile zu überwinden, insbesondere ein System und ein Verfahren bereitzustellen, die einer effizienteren, insbesondere wirtschaftlicheren, Herstellung mindestens eines Stoffes aus mindestens einem Ausgangsmaterial mittels elektrischer Energie dienen.

Die vorliegende Erfindung löst das ihr zugrunde liegende technische Problem durch das in den unabhängigen Ansprüchen 1 und 10 beschriebene System bzw. Verfahren.

Insbesondere wird ein System zur Herstellung mindestens eines Stoffes aus mindestens einem Ausgangsmaterial mittels elektrischer Energie offenbart umfassend:
a) mindestens eine Kraft-Wärme-Kopplungs(KWK)-Anlage,
b) mindestens ein der KWK-Anlage zugeordnetes erstes Stromnetz,
c) mindestens eine Schnittstelle zu einem zweiten Stromnetz,
d) eine Umwandlungseinrichtung, die mit dem ersten und zweiten Stromnetz wirkverbindbar ist, wobei die Umwandlungseinrichtung ausgebildet ist zur Umsetzung des mindestens einen Ausgangsmaterials mittels aus dem ersten und/oder zweiten Stromnetz stammender elektrischer Energie zu dem mindestens einen Stoff, und
wobei das System so ausgebildet ist, dass ein konstanter Energiefluss aus dem ersten und/oder zweiten, insbesondere aus dem ersten und zweiten, Stromnetz in die Umwandlungseinrichtung erreicht werden kann.

Insbesondere betrifft die vorliegende Erfindung ein System zur Herstellung mindestens eines Stoffes aus mindestens einem Ausgangsmaterial mittels elektrischer Energie umfassend:
a) mindestens eine Kraft-Wärme-Kopplungs(KWK)-Anlage,
b) mindestens ein der KWK-Anlage zugeordnetes erstes Stromnetz,
c) mindestens eine Schnittstelle zu einem zweiten Stromnetz,
d) eine Umwandlungseinrichtung, die mit dem ersten und zweiten Stromnetz wirkverbindbar ist, wobei die Umwandlungseinrichtung ausgebildet ist zur Umsetzung des mindestens einen Ausgangsmaterials mittels aus dem ersten und/oder zweiten Stromnetz stammender elektrischer Energie zu dem mindestens einen Stoff, und
wobei das System so ausgebildet ist, dass mittels mindestens einer Stromregelungseinrichtung ein konstanter Energiefluss aus dem ersten und/oder zweiten, insbesondere aus dem ersten und zweiten, Stromnetz in die Umwandlungseinrichtung erreicht werden kann.

Das vorliegende System weist also mindestens eine KWK-Anlage, mindestens ein der KWK-Anlage zugeordnetes erstes Stromnetz, mindestens eine Schnittstelle zu einem zweiten Stromnetz, mindestens eine Umwandlungseinrichtung und mindestens eine Stromregelungseinrichtung auf, wobei die Umwandlungseinrichtung mit dem ersten und - insbesondere gleichzeitig - mit dem zweiten Stromnetz wirkverbindbar, vorzugsweise wirkverbunden, ist und die Umwandlungseinrichtung ausgebildet ist zur Umsetzung des mindestens einen Ausgangsmaterials zu dem mindestens einen Stoff mittels elektrischer Energie aus dem ersten und/oder zweiten Stromnetz, und wobei das System mittels der mindestens einen Stromregelungseinrichtung einen konstanten Energiefluss aus dem ersten und zweiten Stromnetz in die Umwandlungseinrichtung ermöglicht. Die Anbindung des erfindungsgemäßen Systems an ein zweites Stromnetz wird durch die erfindungsgemäß vorgesehene mindestens eine Schnittstelle des Systems zu dem zweiten Stromnetz erreicht. Das erfindungsgemäße System ist insofern vorteilhaft, als dass bei Ankopplung eines zweiten Stromnetzes an die mindestens eine Schnittstelle Strom aus dem zweiten Stromnetz für die Umsetzung des mindestens einen Ausgangsmaterials genutzt werden kann. Das erfindungsgemäße System ermöglicht es auf diese Art und Weise, in einem zweiten Stromnetz gegebenenfalls vorliegende Überschussenergien abzunehmen und einer Umsetzung mindestens eines Ausgangsmaterials in mindestens einen Stoff zuzuführen, das heißt die elektrische Energie gleichsam stofflich zu fixieren.

In besonders bevorzugter Ausführungsform der vorliegenden Erfindung ist das System so ausgebildet, dass ein konstanter Energiefluss aus dem ersten und/oder zweiten, insbesondere ersten und zweiten, Stromnetz in eine der Umwandlungseinrichtung zugeordnete, insbesondere von ihr umfasste, Elektrolyseanlage erreicht werden kann. Die Erfindung sieht demgemäß vorteilhafterweise und in besonders bevorzugter Ausführungsform vor, dass der konstante Energiefluss aus dem ersten und/oder zweiten, insbesondere ersten und zweiten, Stromnetz unmittelbar und direkt der Elektrolyseanlage zugeführt werden kann, insbesondere zugeführt wird.

Im Zusammenhang mit der vorliegenden Erfindung wird unter dem Begriff "wobei das System so ausgebildet ist, dass ein konstanter Energiefluss aus dem ersten und zweiten Stromnetz in die Umwandlungseinrichtung erreicht werden kann" verstanden, dass das System so ausgebildet ist, dass der Umwandlungseinrichtung, insbesondere der ihr zugeordneten Elektrolyseanlage, ein konstanter Energiefluss zugeführt werden kann, unabhängig davon, ob der Energiefluss aus dem ersten oder dem zweiten oder aus dem ersten und zweiten Stromnetz stammt und unabhängig davon, ob der zugeführte Energiefluss aus dem ersten oder zweiten Stromnetz oder beiden schwankt. Das System ist erfindungsgemäß so ausgebildet, dass es in der Lage ist, einen konstanten Energiefluss zu gewährleisten, der aus beiden Stromnetzen stammt, wobei es diesen konstanten Energiefluss auch erlaubt, wenn die Energie allein aus dem ersten oder allein aus dem zweiten Stromnetz stammt, zum Beispiel weil tatsächlich in der jeweiligen Situation und zum jeweiligen Zeitpunkt aufgrund der in den Stromnetzen vorliegenden Kapazitäten und gegebenenfalls vorliegenden Überschüssen an Energie ein Energiefluss allein aus dem ersten oder allein aus dem zweiten Stromnetz in die Umwandlungseinrichtung stattfindet.

Das erfindungsgemäße System ist so ausgebildet, das heißt so ausgeführt, dass es den verschiedenen in Stromnetzen üblicherweise vorliegenden Situationen, insbesondere Energiefluktuationen, zum Beispiel Überschüssen an elektrischer Energie, Rechnung tragen kann, indem der Energiefluss einerseits so beeinflusst wird, dass er konstant die Umwandlungseinrichtung, insbesondere die Elektrolyseanlage, erreicht, und andererseits die erfindungsgemäß vorteilhafte, sich gegenseitig ausbalancierende Nutzung des ersten und/oder zweiten Stromnetzes vorsieht.

Die Ausbildung des Systems zur Bereitstellung eines konstanten Energieflusses aus dem ersten und zweiten Stromnetz in die Umwandlungseinrichtung, insbesondere in eine dieser zugeordnete Elektrolyseanlage, ermöglicht in vorteilhafter Weise einen besonders wirtschaftlichen Betrieb einer Umwandlungseinrichtung, insbesondere einer Elektrolyseanlage, zur Umsetzung mindestens eines Ausgangsmaterials durch aus dem ersten und/oder zweiten Stromnetzes stammende elektrische Energie zu dem mindestens einen Stoff. Das erfindungsgemäße System verbessert aufgrund des bereitgestellten konstanten Energieflusses die Wirtschaftlichkeit des Betriebs der Umwandlungseinrichtung, insbesondere der Elektrolyseanlage, da die mittlere Leistung der Maximalleistung der Umwandlungseinrichtung, insbesondere der Elektrolyseanlage, angenähert werden kann. Infolgedessen kann die Umwandlungseinrichtung, insbesondere die in dieser bevorzugt vorgesehene mindestens eine Elektrolyseanlage, baulich und in ihrer Kapazität so ausgeführt sein, dass schwankenden eingehenden Stromzuflüssen in deutlich vermindertem Maße Rechnung getragen werden muss.

Das erfindungsgemäße System ermöglicht es also, durch Nutzung von Energieflüssen aus dem ersten Stromnetz und/oder zweiten Stromnetz trotz gegebenenfalls stark schwankender Stromeinträge aus dem zweiten Stromnetz einen konstanten Energiefluss in die Umwandlungseinrichtung abzugeben. Im zweiten Stromnetz gegebenenfalls vorliegende Leistungsspitzen können so zur Herstellung mindestens eines Stoffes genutzt werden. Das vorliegende System umfassend mindestens eine KWK-Anlage, mindestens ein ihr zugeordnetes erstes Stromnetz, mindestens eine Schnittstelle zu einem zweiten Stromnetz und die mindestens eine Umwandlungseinrichtung, insbesondere umfassend eine Elektrolyseanlage, ist in der Lage, in vorteilhafter Weise das zweite Stromnetz zu stabilisieren und regulieren, wobei gleichzeitig die aus dem zweiten Stromnetz, insbesondere in Fällen der Überkapazität, anfallende Strommenge zur Umwandlung von mindestens einem Ausgangsmaterial in mindestens einen Stoff verwendet werden kann. Der aus dem zweiten Stromnetz stammende Energieüberschuss kann demgemäß die von der KWK-Anlage bereitgestellte Energiemenge ganz oder teilweise ersetzen.

Ist der aus dem zweiten Stromnetz stammende Energiefluss ausreichend hoch, den gewünschten konstanten Energiefluss für die Umwandlungseinrichtung, insbesondere die Elektrolyseanlage, zu gewährleisten, wird erfindungsgemäß mittels einer vorteilhafterweise vorhandenen Stromregelungseinrichtung kein zusätzlicher Energiefluss aus dem ersten Stromnetz zur Umwandlungseinrichtung geschaltet. Liegt dagegen im zweiten Stromnetz keine nutzbare Kapazität vor, kann erfindungsgemäß, insbesondere mittels einer vorteilhafterweise vorhandenen Stromregelungseinrichtung, der konstante Energiefluss allein aus dem ersten Stromnetz der KWK-Anlage gewährleistet werden. In der Regel wird der konstante Energiefluss erfindungsgemäß, insbesondere mittels einer vorteilhafterweise vorhandenen Stromregelungseinrichtung, durch Nutzung beider Stromnetze erreicht.

In einer besonders bevorzugten Ausführungsform sieht die vorliegende Erfindung daher ein System der vorstehend beschriebenen Art vor, wobei überschüssige elektrische Energie aus einer, insbesondere wärmegeführten, KWK-Anlage genutzt wird, um eine Umwandlungseinrichtung, insbesondere eine eine Elektrolyseanlage umfassende Umwandlungseinrichtung, insbesondere zur Methanolgewinnung aus Wasser und Kohlendioxid, zu betreiben, wobei das System so ausgebildet ist, dass ein konstanter Energiefluss aus dem ersten und/oder zweiten Stromnetz, insbesondere aus dem ersten und zweiten Stromnetz, in die Umwandlungseinrichtung, insbesondere, bevorzugt unmittelbar, in die Elektrolyseanlage, erreicht werden kann, sodass im Fall zum Beispiel einer Überversorgung an elektrischer Energie im zweiten Stromnetz, insbesondere einem öffentlichen Netz, dieser Überschuss an elektrischer Energie entnommen werden kann, um so die aus der KWK-Anlage stammende elektrische Energie ganz oder teilweise zu ersetzen.

In besonders bevorzugter Ausführungsform ist das erfindungsgemäße System und ein dieses System nutzendes Verfahren in der Lage, die elektrische Leistung der KWK-Anlage entsprechend den Anforderungen des erfindungsgemäßen Systems zu beeinflussen, insbesondere zu regeln, nämlich so, dass ein konstanter Energiefluss aus dem ersten und/oder zweiten, insbesondere ersten und zweiten, Stromnetz in die Umwandlungseinrichtung, insbesondere die Elektrolyseanlage, bereitgestellt wird, insbesondere durch Regelung eines erfindungsgemäß bevorzugt vorgesehenen Bypasses für Frischdampf an einer Turbine eines Generators der KWK-Anlage.

Die Erfindung sieht insbesondere ein erfindungsgemäßes System der vorstehend beschriebenen Art vor, wobei das System, insbesondere die KWK-Anlage, so ausgebildet ist, insbesondere so beeinflussbar, insbesondere regelbar, ist, dass sich, bevorzugt unabhängig von der Nutzung des ersten und/oder zweiten Stromnetzes zum Betrieb der Umwandlungseinrichtung, der Wirkungsgrad der KWK-Anlage nicht ändert, das heißt konstant bleibt, insbesondere dass die KWK-Anlage einen konstanten Wirkungsgrad von mindestens 85%, insbesondere mindestens 88%, insbesondere mindestens 90%, vorzugsweise mindestens 91%, aufweist.

In besonders bevorzugter Ausführungsform wird ein System der vorstehend beschriebenen Art offenbart, wobei das System so ausgebildet ist, dass unabhängig von dem Energiefluss aus dem ersten und/oder zweiten Stromnetz ein konstanter Wirkungsgrad der KWK-Anlage von mindestens 90% gewährleistet ist.

Die Ausbildung des Systems zur Bereitstellung eines konstanten Energieflusses wird durch mindestens eine Stromregelungseinrichtung gewährleistet, die zentral oder dezentral ausgeführt sein kann, und den Energiefluss aus dem ersten und zweiten Stromnetz so reguliert, dass die Umwandlungseinrichtung, insbesondere die Elektrolyseanlage, einen konstanten Energiefluss erhält. Die Stromregelungseinrichtung kann bevorzugt aus mehreren Komponenten, die vorzugsweise dezentral in dem System verteilt sind, ausgeführt sein.

Das erfindungsgemäße System weist daher mindestens eine Stromregelungseinrichtung auf.

Erfindungsgemäß weist das System der vorliegenden Erfindung mindestens eine Stromregelungseinrichtung auf, die so eingerichtet ist, dass ein konstanter Energiefluss aus dem ersten und/oder zweiten Stromnetz in die Umwandlungseinrichtung, insbesondere die Elektrolyseanlage, gewährleistet wird. In einer bevorzugten Ausführungsform ist es mittels der mindestens einen Stromregelungseinrichtung möglich, Fluktuationen des elektrischen Energieflusses aus dem zweiten Stromnetz durch einen entsprechend angepassten Energiefluss aus dem ersten Stromnetz so auszugleichen, dass ein konstanter Energiefluss zur Umwandlungseinrichtung, insbesondere zur Elektrolyseanlage erreicht wird.

Die Erzeugung von elektrischer Energie in dem ersten Stromnetz in Verbindung mit der mindestens einen KWK-Anlage erfolgt erfindungsgemäß in einer bevorzugten Ausführungsform derart, dass Dampf von einem höheren Druckniveau über elektrische Generatoren auf ein niedrigeres Druckniveau entspannt ("verstromt") wird. In einer besonders bevorzugten anderen Ausführungsform kann vorgesehen sein, Dampf über Stell- oder Drosseleinrichtungen, welche bevorzugt als Reduzierstationen ausgebildet sind, unter Umgehung der elektrischen Generatoren ("unverstromt") auf das niedrigere Druckniveau zu entspannen. Durch eine geeignete Aufteilung der Dampfmengenströme zwischen den elektrischen Generatoren und den Stell- oder Drosseleinrichtungen, insbesondere Reduzierstationen, kann der erzeugte elektrische Energiefluss im ersten Stromnetz vorteilhafterweise gezielt dem aktuellen Bedarf angepasst werden. In einer bevorzugten Ausführungsform macht sich die Stromregelungseinrichtung diesen Regulierungsmechanismus zu Nutze, um die Fluktuationen aus dem zweiten Stromnetz auszugleichen und einen konstanten Energiefluss zur Umwandlungseinrichtung, insbesondere Elektrolyseanlage, zu gewährleisten.

Unter einer "Stromregelungseinrichtung" wird eine Einrichtung verstanden, welche eingerichtet ist, um einen Energiefluss in die Umwandlungseinrichtung, insbesondere die Elektrolyseanlage, insbesondere anteilig, aus dem zweiten Stromnetz und/oder aus dem ersten Stromnetz zu speisen. Insbesondere ist die Stromregelungseinrichtung eingerichtet, um die Anteile an dem Energiefluss in die Umwandlungseinrichtung aus dem ersten und zweiten Stromnetz so zu beeinflussen, dass insgesamt ein konstanter Energiefluss in die Umwandlungseinrichtung erreicht wird.

Im Zusammenhang mit der vorliegenden Erfindung wird unter dem Begriff "wirkverbunden" verstanden, dass Komponenten miteinander so verbunden sind, dass die mit der Verbindung intendierte Wirkung erreicht wird. Eine Wirkverbindung setzt daher einerseits eine Verbindung und andererseits die Realisierung der aufgrund der Verbindung angestrebten Wirkung voraus.

Unter dem Begriff "beeinflussen" wird dabei insbesondere eine Steuerung oder eine Regelung verstanden. Insbesondere ist es möglich, dass die Stromregelungseinrichtung eingerichtet ist, um den Energiefluss in die Umwandlungseinrichtung durch anteilige Speisung aus dem ersten und/oder zweiten Stromnetz konstant zu regeln. Eine anteilige Speisung des Energieflusses in die Umwandlungseinrichtung aus dem ersten und zweiten Stromnetz schließt ein, dass der gesamte Energiefluss aus dem ersten Stromnetz gespeist wird, wobei kein Energiefluss aus dem zweiten Stromnetz entnommen wird; dass der gesamte Energiefluss aus dem zweiten Stromnetz gespeist wird, wobei kein Energiefluss aus dem ersten Stromnetz entnommen wird; und dass ein bestimmter, vorzugsweise variabler, insbesondere kontinuierlich variabler, Anteil des Energieflusses in die Umwandlungseinrichtung aus dem ersten Stromnetz und ein komplementärer, zu dem konstanten Energiefluss in die Umwandlungseinrichtung noch fehlender Anteil dieses Energieflusses aus dem zweiten Stromnetz, oder umgekehrt, gespeist wird.

In einer besonders bevorzugten Ausführungsform ist die Stromregelungseinrichtung oder Komponenten davon in der KWK-Anlage angeordnet. In einer weiteren bevorzugten Ausführungsform ist die Stromregelungseinrichtung oder Komponenten davon in der Umwandlungseinrichtung angeordnet.

In einer bevorzugten Ausführungsform der Erfindung ist die Stromregelungseinrichtung ausgebildet, um die Anteile an dem Energiefluss in die Umwandlungseinrichtung aus dem ersten und zweiten Stromnetz durch aktiven Reglereingriff zu beeinflussen. In einer bevorzugten Ausführungsform ist die Stromregelungseinrichtung ausgebildet, um einen zu dem vorzugweise konstant gehaltenen Energiefluss in die Umwandlungseinrichtung fehlenden Anteil an einem Energiefluss aus einem der Stromnetze automatisch durch einen komplementären Energiefluss aus dem anderen Stromnetz auszugleichen.

In einer besonders bevorzugten Ausführungsform weist das System der vorliegenden Erfindung e) mindestens eine Stromerzeugungsanlage und f) mindestens ein der Stromerzeugungsanlage zugeordnetes Stromnetz auf. Das der Stromerzeugungsanlage zugeordnete Stromnetz ist das zweite Stromnetz.

In besonderes bevorzugter Ausführungsform betrifft die vorliegende Erfindung ein System der genannten Art, wobei die Stromerzeugungsanlage eine Anlage zur Herstellung von Strom aus erneuerbaren Energien ist, insbesondere eine Wasserkraft-, Windkraft- oder Photovoltaikanlage.

In einer bevorzugten Ausführungsform ist das erfindungsgemäße System so ausgebildet, dass ein Energiefluss vom zweiten Stromnetz in das erste Stromnetz stattfinden kann. Im zweiten Stromnetz vorliegender überschüssiger Strom, insbesondere aus regenerativen Stromerzeugungsanlagen, zum Beispiel Windkraft- und Photovoltaikanlagen, wird vorteilhafterweise in das Stromnetz einer KWK-Anlage aufgenommen und so zur Herstellung des mindestens einen Stoffes mithilfe einer Umwandlungseinrichtung eingesetzt.

In einer besonders bevorzugten Ausführungsform wird der aus dem zweiten Stromnetz stammende Energiefluss mittels eines aus dem ersten Stromnetz stammenden Energieflusses verstetigt.

Im Zusammenhang mit der vorliegenden Erfindung wird unter der "Umsetzung oder Herstellung mindestens eines Stoffes aus mindestens einem Ausgangsmaterial mittels elektrischer Energie" verstanden, dass aus mindestens einem Ausgangsmaterial mindestens ein Stoff hergestellt wird, das heißt dass das mindestens eine Ausgangsmaterial zu dem mindestens einen Stoff stofflich umgewandelt wird, wobei elektrische Energie in der Umwandlungseinrichtung entweder unmittelbar die stoffliche Umwandlung verursacht oder/und in der Umwandlungseinrichtung mindestens eines der Ausgangsmaterialien hergestellt wird, das durch Umsetzung mit einem weiteren Ausgangsmaterial zu der Herstellung des mindestens einen Stoffes führt.

Im Zusammenhang mit der vorliegenden Erfindung wird unter einer "Stromerzeugungsanlage" jedwede Anlage verstanden, die aus einem Energieträger Strom erzeugt, insbesondere aus einem regenerativen Energieträger, insbesondere Wind, Licht oder Wasser.

Stromerzeugungsanlagen können daher beispielsweise Primärenergiekraftwerke, zum Beispiel Kohle-, Gas- oder Atomkraftwerke, oder auf regenerierbaren Energien basierende Kraftwerke, beispielsweise Wasserkraftwerke, Photovoltaikanlagen oder Windkraftwerke, sein.

Im Zusammenhang mit der vorliegenden Erfindung wird unter einem "Stromnetz" ein Netzwerk aus elektrischen Stromleitungen und den dazugehörigen Einrichtungen wie Schalt- und Umspannwerke verstanden.

In besonders bevorzugter Ausführungsform ist das erste Stromnetz ein privates, vorzugsweise lokales, Stromnetz. Insbesondere handelt es sich bei dem ersten Stromnetz bevorzugt um ein privates, insbesondere lokales, Stromnetz eines Betreibers der KWK-Anlage und/oder eines Betreibers der Umwandlungseinrichtung. Insbesondere kann es sich um ein industrielles Stromnetz, insbesondere um ein firmeneigenes Stromnetz, insbesondere zur Versorgung von elektrischen Verbrauchern auf einem Firmengelände mit elektrischer Energie, handeln.

In besonders bevorzugter Ausführungsform ist das zweite Stromnetz ein öffentliches, insbesondere regionales, Stromnetz.

Im Zusammenhang mit der vorliegenden Erfindung wird unter einer "Kraft-Wärme-Kopplungs (KWK)-Anlage" eine, vorzugsweise ortsfeste, technische Verbrennungsanlage verstanden, die zur gleichzeitigen Umwandlung von eingesetzter Energie in elektrische Energie, insbesondere Brennstoffe, und Nutzwärme dient.

In bevorzugter Ausführungsform werden unter KWK-Anlagen Gasturbinenkraftwerke, Heizkraftwerke, Blockheizkraftwerke, Stirlingmotoren, Brennstoffzellen oder KWK-Dampfkraftwerke verstanden. Derartige KWK-Anlagen können mit den verschiedensten Brennstoffen betrieben werden und zeichnen sich in der Regel dadurch aus, hocheffizient Strom und Wärme zu erzeugen.

Die im erfindungsgemäßen System vorgesehene Umwandlungseinrichtung dient dazu, aus mindestens einem Ausgangsmaterial mittels aus dem ersten, dem zweiten oder beiden Stromnetzen stammender elektrischer Energie mindestens einen Stoff herzustellen. In besonders bevorzugter Ausführungsform wird die elektrische Energie elektrolytisch zur Herstellung eines Stoffes genutzt, mittels einer Elektrolyseanlage. Erfindungsgemäß bevorzugt umfasst die Umwandlungseinrichtung eine Elektrolyseanlage. In einer Ausführungsform stellt die Umwandlungseinrichtung eine Elektrolyseanlage dar. Die Elektrolyseanlage kann in einer Ausführungsform zur Herstellung von Wasserstoff und Sauerstoff aus Wasser dienen.

In einer Ausführungsform der vorliegenden Erfindung kann der elektrolytisch mittels der Elektrolyseanlage hergestellte Stoff das erwünschte Endprodukt darstellen. In einer anderen Ausführungsform kann der elektrolytisch hergestellte Stoff ein Zwischenprodukt darstellen und entweder in der Umwandlungseinrichtung selbst oder außerhalb einer weiteren Umsetzung zu einem interessierenden Stoff, das heißt Endprodukt, zugeführt werden.

In einer besonders bevorzugten Ausführungsform weist die Umwandlungseinrichtung zusätzlich zu der Elektrolyseanlage mindestens einen Umsetzungsreaktor auf, der der Umsetzung mindestens eines Ausgangsmaterials, beispielsweise eines aus der Elektrolyse stammenden Stoffes, zu dem mindestens einen Stoff dient. In einer besonders bevorzugten Ausführungsform kann der Umsetzungsreaktor zur Umsetzung von aus der Elektrolyseanlage stammendem Wasserstoff mit CO₂ dienen, insbesondere zur Herstellung von Methanol.

In einer besonders bevorzugten Ausführungsform sind in der Umwandlungseinrichtung Vorrichtungen, insbesondere Leitungen, zum Transport von Ausgangsmaterialien, Zwischenprodukten und hergestellten Stoffen, sowie Behälter zur Lagerung von Ausgangsmaterialien, Zwischenprodukten, Produkten und/oder zur Weiterverarbeitung der hergestellten Stoffe vorhanden.

In einer Ausführungsform der vorliegenden Offenbarung umfasst die Umwandlungseinrichtung keine KWK-Anlage.

In einer besonders bevorzugten Ausführungsform kann das Ausgangsmaterial CO₂, Wasser oder beides sein.

Erfindungsgemäß ist bevorzugt, dass das mindestens eine Ausgangsmaterial, insbesondere CO₂, aus Biomaterialien, konventionellen Wärmekraftwerken, Biogas- und Bioethanolanlagen, chemischen Produktionsanlagen, Brauereien, Stahl-, Zement- oder Kalkwerken stammt. In einer besonders bevorzugten Ausführungsform stammt mindestens ein Ausgangsmaterial, insbesondere CO₂, aus Biomaterialien, insbesondere Stärke, Zucker oder Getreide.

In einer besonders bevorzugten Ausführungsform kann der, insbesondere aus CO₂ und/oder H₂O, hergestellte Stoff Wasserstoff, Sauerstoff, Methan, Methanol, Harnstoff, Ameisensäure, Ethanol, MTBE (Methyl-tert-butylether), DMC (Dimethylcarbonat), DME (Dimethylether) oder ein längerkettiger Kohlenwasserstoff sein. In besonders bevorzugter Ausführungsform können die längerkettigen Kohlenwasserstoffe durch Fischer-Tropsch-Synthese über Synthesegase oder durch einen Methanol-To-Gasoline-Prozess über Methanol und Dimethylether hergestellt sein. In besonders bevorzugter Ausführungsform ist der erfindungsgemäß hergestellte Stoff Methanol oder Methan, insbesondere Methanol.

In einer besonders bevorzugten Ausführungsform wird in der Umwandlungseinrichtung aus den Ausgangsmaterialien CO₂ und Wasser nach elektrolytischer Wasserspaltung und Wasserstoffgewinnung der Stoff Methanol erhalten. In besonders bevorzugter Ausführungsform stammt das CO₂ aus der Fermentation von Biomaterialien, beispielsweise der Ethanolherstellung.

In einer besonders bevorzugten Ausführungsform wird ein System der Erfindung bereitgestellt, wobei die KWK-Anlage einen Dampferzeuger und eine mit einem elektrischen Generator wirkverbundene Dampfturbine aufweist, wobei der Dampferzeuger mit der Dampfturbine wirkverbunden ist, wobei ein Dampfstrom von dem Dampferzeuger durch die Dampfturbine so steuerbar ist, dass ein aus dem zweiten Stromnetz stammender Energiefluss mittels eines durch den elektrischen Generator bereitgestellten Energiefluss verstetigt wird. In einer Ausführungsform der vorliegenden Erfindung weist das System einen Bypass für Frischdampf um die Dampfturbine, insbesondere um einen die Dampfturbine umfassenden Dampfpfad, auf. In besonders bevorzugter Ausführungsform kann durch Regelung des Bypasses für Frischdampf um einen die Dampfturbine umfassenden Dampfpfad herum die elektrische Leistung des Generators angepasst werden.

Gemäß einer bevorzugten Ausführungsform des Systems ist vorgesehen, dass die Stromregelungseinrichtung mit einer Dampfsteuereinrichtung zu deren Ansteuerung wirkverbunden ist, sodass ein Dampfstrom von dem Dampferzeuger durch die Dampfturbine durch Ansteuerung der Dampfsteuereinrichtung von der Stromregelungseinrichtung steuerbar ist. Insbesondere ist es möglich, dass die Dampfsteuerungseinrichtung eine Stell- oder Drosseleinrichtung in dem die Dampfturbine umfassenden Dampfpfad, insbesondere stromaufwärts der Dampfturbine, und/oder eine Stell- oder Drosseleinrichtung in dem Bypass für Frischdampf um den die Dampfturbine umfassenden Dampfpfad herum aufweist, die zur Steuerung des Dampfstroms von dem Dampferzeuger durch die Dampfturbine von der Dampfsteuereinrichtung ansteuerbar ist. Dabei wird hier unter einer "Steuerung" sowohl eine Steuerung im engeren Sinne ohne Rückkopplung, als auch eine Regelung des Dampfstroms durch die Dampfturbine verstanden. Die Stell- oder Drosseleinrichtung kann bevorzugt als Reduzierstation ausgebildet sein. Durch entsprechende Ansteuerung der Dampfsteuereinrichtung von der Stromregelungseinrichtung ist es möglich, die von dem elektrischen Generator bereitgestellte Energie an die aus dem zweiten Stromnetz zur Verfügung stehende Energie, insbesondere an eine in dem zweiten Stromnetz zur Verfügung stehende Überkapazität an Energie, anzupassen, sodass letztlich der Umwandlungseinrichtung ein konstanter Energiefluss zugeführt wird.

Die KWK-Anlage ist bevorzugt als wärmegeführte KWK-Anlage ausgebildet, insbesondere als wärmegeführte KWK-Anlage, welche Dampf für einen - insbesondere industriellen - Dampfverbraucher, beispielsweise ein Industriewerk, erzeugt. Dabei wird insbesondere eine von der KWK-Anlage abgegebene Dampfmenge, insbesondere ein Dampfmassenstrom, abhängig von einem momentanen Bedarf des Dampfverbrauchers gesteuert oder geregelt.

Bevorzugt wird überschüssige elektrische Energie aus der wärmegeführten KWK-Anlage genutzt, um die Umwandlungseinrichtung zu betreiben. Im Falle einer Überkapazität in dem zweiten Stromnetz kann diese Überkapazität an elektrischer Energie aus dem zweiten Stromnetz entnommen werden. Damit ist es möglich, den Überschuss aus der Eigenerzeugung der KWK-Anlage ganz oder teilweise zu ersetzen. Insbesondere durch Ansteuerung der Dampfsteuerungseinrichtung, bevorzugt durch Regelung des Bypasses für Frischdampf an der Dampfturbine, kann die elektrische Leistung des elektrischen Generators, welcher durch die Dampfturbine angetrieben wird, angepasst werden. Dabei wird die KWK-Anlage bevorzugt so betrieben, dass die Wärme- und insbesondere Dampfversorgung des Dampfverbrauchers durch die KWK-Anlage gesichert bleibt. Eine Brennstoffversorgung für den Dampferzeuger wird bevorzugt an den Bedarf an Wärmeenergie und an elektrischer Energie aus der KWK-Anlage angepasst.

Die vorliegende Erfindung betrifft auch ein Verfahren zur Herstellung mindestens eines Stoffes aus mindestens einem Ausgangsmaterial mittels elektrischer Energie, wobei ein System der vorliegenden Erfindung eingesetzt wird. In besonders bevorzugter Ausführungsform betrifft die vorliegende Erfindung ein Verfahren zur Herstellung mindestens eines Stoffes aus mindestens einem Ausgangsmaterial, wobei das mindestens eine Ausgangsmaterial einer Umwandlungseinrichtung eines erfindungsgemäßen Systems zugeführt, in dieser umgesetzt und der mindestens eine Stoff hergestellt wird.

Die vorliegende Erfindung betrifft demgemäß auch ein Verfahren zur Herstellung mindestens eines Stoffes aus mindestens einem Ausgangsmaterial mittels elektrischer Energie, wobei ein System der vorliegenden Erfindung eingesetzt wird und wobei das mindestens eine Ausgangsmaterial einer Umwandlungseinrichtung, insbesondere einer Elektrolyseanlage, eines erfindungsgemäßen Systems zugeführt, in dieser unter konstantem Energiefluss aus dem ersten und/oder zweiten, insbesondere ersten und zweiten, Stromnetz umgesetzt und der mindestens eine Stoff hergestellt wird.

In einer besonders bevorzugten Ausführungsform sieht die vorliegende Erfindung daher ein Verfahren der vorstehend beschriebenen Art vor, wobei überschüssige elektrische Energie aus einer, insbesondere wärmegeführten, KWK-Anlage genutzt wird, um eine Umwandlungseinrichtung, insbesondere eine eine Elektrolyseanlage umfassende Umwandlungseinrichtung, insbesondere zur Methanolgewinnung aus Wasser und Kohlendioxid, zu betreiben und wobei ein konstanter Energiefluss aus dem ersten und/oder zweiten Stromnetz, insbesondere aus dem ersten und zweiten Stromnetz, in die Umwandlungseinrichtung, insbesondere in die Elektrolyseanlage, stattfindet. Im Fall einer Überversorgung an elektrischer Energie im zweiten Stromnetz, insbesondere einem öffentlichen Netz, kann dieser Überschuss an elektrischer Energie entnommen werden, um so die aus der KWK-Anlage stammende elektrische Energie ganz oder teilweise zu ersetzen.

In besonders bevorzugter Ausführungsform wird im erfindungsgemäßen Verfahren die elektrische Leistung der KWK-Anlage so beeinflusst, insbesondere so geregelt, dass ein konstanter Energiefluss aus dem ersten und/oder zweiten, insbesondere ersten und zweiten, Stromnetz in die Umwandlungseinrichtung, insbesondere die Elektrolyseanlage, bereitgestellt wird, insbesondere durch Regelung eines erfindungsgemäß bevorzugt vorgesehenen Bypasses für Frischdampf an einer Turbine eines Generators der KWK-Anlage.

Die Erfindung sieht insbesondere ein erfindungsgemäßes Verfahren der vorstehend beschriebenen Art vor, wobei das System, insbesondere die KWK-Anlage, so beeinflusst, insbesondere geregelt, wird, dass sich, bevorzugt unabhängig von der Nutzung des ersten und/oder zweiten Stromnetzes zum Betreiben der Umwandlungseinrichtung, der Wirkungsgrad der KWK-Anlage nicht ändert, das heißt konstant bleibt, insbesondere einen konstanten Wirkungsgrad von mindestens 85%, insbesondere mindestens 88%, insbesondere mindestens 90%, vorzugsweise mindestens 91%, aufweist.

In besonders bevorzugter Ausführungsform wird ein Verfahren der vorstehend beschriebenen Art offenbart, wobei unabhängig von dem Energiefluss aus dem ersten und/oder zweiten Stromnetz die KWK-Anlage so beeinflusst wird, dass ein konstanter Wirkungsgrad der KWK-Anlage von mindestens 90% vorliegt.

Die Erfindung stellt auch ein Verfahren zum Betreiben einer Umwandlungseinrichtung, insbesondere einer Elektrolyseanlage, zur Umsetzung mindestens eines Ausgangsmaterials mittels elektrischer Energie zu mindestens einem Stoff bereit, umfassend die folgenden Schritte:
- Beziehen von elektrischer Energie aus wenigstens einem Stromnetz von zwei Stromnetzen, wobei
- ein erstes Stromnetz einer KWK-Anlage zugeordnet ist, wobei
- ein zweites Stromnetz einer Stromerzeugungsanlage zugeordnet ist, wobei
- ein Energiefluss aus den Stromnetzen zu der Umwandlungseinrichtung, insbesondere der Elektrolyseanlage, so beeinflusst wird, dass
- der Umwandlungseinrichtung, insbesondere der Elektrolyseanlage, ein konstanter Energiefluss aus den Stromnetzen zugeführt wird,
- wobei durch die Umwandlungseinrichtung unter Zufuhr elektrischer Energie das mindestens eine Ausgangsmaterial zu dem mindestens einen Stoff umgesetzt wird.

Dass der Energiefluss aus den Stromnetzen zu der Umwandlungseinrichtung, insbesondere der Elektrolyseanlage, beeinflusst wird, bedeutet insbesondere, dass der Energiefluss aus den Stromnetzen zu der Umwandlungseinrichtung, insbesondere der Elektrolyseanlage, gesteuert oder geregelt wird. Besonders bevorzugt wird der Energiefluss aus den Stromnetzen zu der Umwandlungseinrichtung, insbesondere der Elektrolyseanlage, mittels einer Stromregelungseinrichtung so geregelt, dass der Umwandlungseinrichtung, insbesondere der Elektrolyseanlage, ein konstanter Energiefluss aus den Stromnetzen zugeführt wird. Weitere vorteilhafte Ausgestaltungen der vorliegenden Erfindung ergeben sich aus den Unteransprüchen.

Die Erfindung wird anhand der folgenden Beispiele und der dazugehörigen Figuren näher erläutert.

Die Figuren zeigen:
Figur 1 eine schematische Darstellung einer ersten Ausführungsform des erfindungsgemäßen Systems,
Figur 2 eine schematische Darstellung einer weiteren Ausführungsform eines erfindungsgemäßen Systems und
Figur 3 eine schematische Darstellung einer weiteren Ausführungsform eines erfindungsgemäßen Systems.

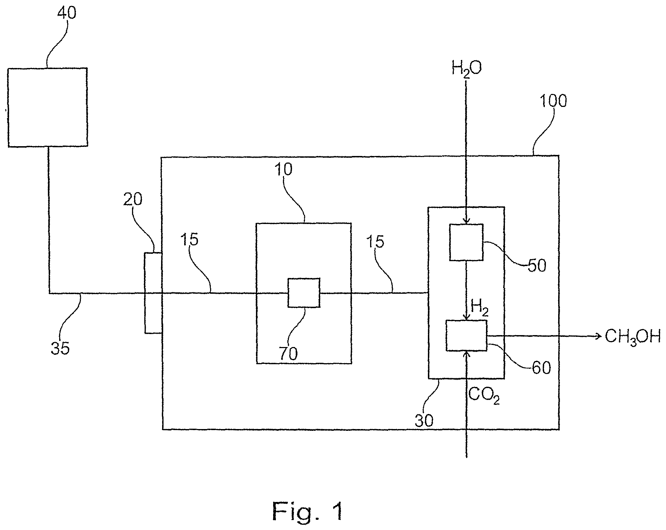

Figur 1 zeigt ein System 100 zur Herstellung mindestens eines Stoffes, nämlich CH₃OH (Methanol), aus mindestens einem Ausgangsmaterial, nämlich H₂O und CO₂, wobei das System 100 eine KWK-Anlage 10, ein der KWK-Anlage zugeordnetes Stromnetz 15, eine Schnittstelle 20 und eine Umwandlungseinrichtung 30 aufweist. Die Schnittstelle 20 des Systems 100 stellt eine Verbindung zwischen dem ersten Stromnetz 15 und einem zweiten Stromnetz 35 her, wobei das zweite Stromnetz 35 als regionales Stromnetz ausgeführt ist und einer regionalen Stromerzeugungsanlage 40, nämlich einer Photovoltaik- oder Windkraftanlage, zugeordnet ist. Die mit dem ersten 15 und somit auch dem zweiten 35 Stromnetz wirkverbundene Umwandlungseinrichtung 30 weist eine Elektrolyseanlage 50 und einen Umsetzungsreaktor 60 auf. Dargestellt ist ferner eine Stromregelungseinrichtung 70.

Figur 1 zeigt die Verbindung des ersten Stromnetzes 15 über eine Schnittstelle 20 des Systems 100 mit dem zweiten Stromnetz 35 einer Stromerzeugungsanlage 40, die ihren Strom aus regenerativen Energieträgern bezieht und in der zeitweise Überkapazitäten vorliegen. Durch die Ausbildung des Systems gemäß Figur 1, gemäß der ein Energiefluss von der Stromerzeugungsanlage 40 über das zweite Stromnetz 35 und die Schnittstelle 20 in das erste Stromnetz 15 der KWK-Anlage 10 erfolgt, kann das erfindungsgemäße System 100 den aus den Überkapazitäten resultierenden Strom in das erste Stromnetz 15 aufnehmen, dabei das zweite Stromnetz 35 stabilisieren und die aus dem zweiten Stromnetz 35 aufgenommene elektrische Energie der Umwandlungseinrichtung 30 zur Herstellung eines Stoffes zuführen. Die in der KWK-Anlage 10 angeordnete Stromregelungseinrichtung 70 beeinflusst die Energieflüsse aus dem ersten und zweiten Stromnetz 15, 35 derart, dass ein konstanter Energiefluss in die Umwandlungseinrichtung 30 erreicht wird. Der konstante Energiefluss aus der Stromregelungseinrichtung 70 kann unmittelbar in die Elektrolyseanlage 50 geleitet werden (nicht dargestellt).

In der Umwandlungseinrichtung 30 wird in der Elektrolyseanlage 50 durch den aus dem ersten und zweiten Stromnetz 15, 35 stammenden Energiefluss eine Spaltung von in die Umwandlungseinrichtung 30 eingespeistem H₂O zu Wasserstoff und Sauerstoff erreicht und der gebildete Wasserstoff entweder unmittelbar als interessierender Stoff erhalten oder aber in einem Umsetzungsreaktor 60 mit einem weiteren zugeführten Ausgangsmaterial, nämlich CO₂, zu zum Beispiel Methanol umgesetzt.

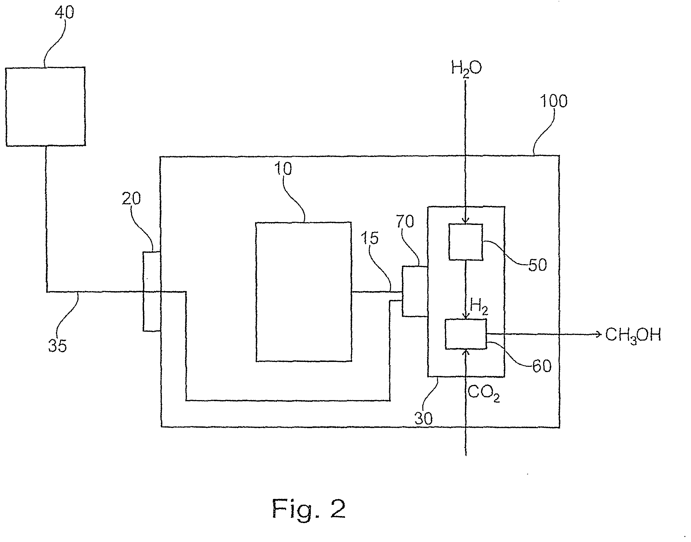

Gemäß Figur 2, in der für funktions- oder baugleiche Elemente die gleichen Bezugsziffern wie in Figur 1 verwendet werden, wird ebenfalls das zweite Stromnetz 35 über die Schnittstelle 20 mit dem erfindungsgemäßen System 100 verbunden. Der aus der Stromerzeugungsanlage 40 stammende Strom wird jedoch nicht in das erste Stromnetz 15 der KWK-Anlage 10 aufgenommen, sondern zusammen mit dem aus der KWK-Anlage 10 stammenden Strom des ersten Stromnetzes 15 in die in der Umwandlungseinrichtung 30, die mit dem ersten 15 und zweiten 35 Stromnetz wirkverbunden ist, vorhandene Stromregelungseinrichtung 70 gespeist, wo die Energieflüsse aus den Stromnetzen 35, 15 so beeinflusst, insbesondere geregelt, werden, dass ein konstanter Energiefluss die Umwandlungseinrichtung 30 erreicht wird.

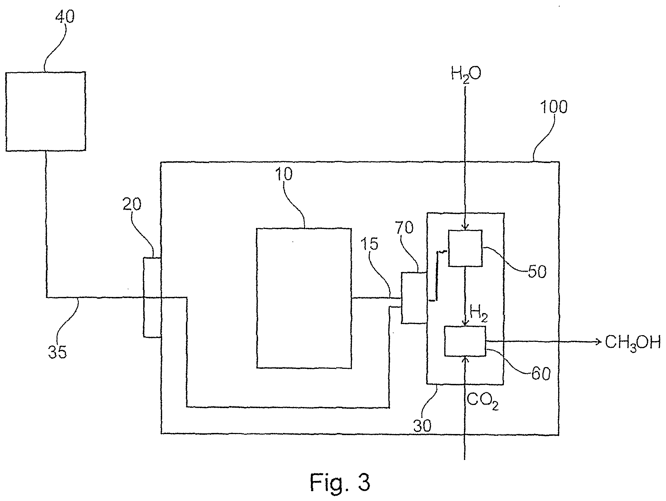

Figur 3 stellt ein System gemäß Figur 2 dar, wobei der konstante Energiefluss aus der Stromregelungseinrichtung 70 in die Elektrolyseanlage 50 fließt.

Insbesondere folgende Aspekte werden offenbart, diese sind jedoch nicht Teil der vorliegenden Erfindung:
Aspekt 1:
   System zur Herstellung mindestens eines Stoffes aus mindestens einem Ausgangsmaterial mittels elektrischer Energie umfassend:
   a) mindestens eine Kraft-Wärme-Kopplungs(KWK)-Anlage (10),
   b) mindestens ein der KWK-Anlage (10) zugeordnetes erstes Stromnetz (15),
   c) mindestens eine Schnittstelle (20) zu einem zweiten Stromnetz (35),
   d) eine Umwandlungseinrichtung (30), die mit dem ersten und zweiten Stromnetz (15, 35) wirkverbindbar ist, wobei die Umwandlungseinrichtung (30) ausgebildet ist zur Umsetzung des mindestens einen Ausgangsmaterials mittels aus dem ersten und/oder zweiten Stromnetz (15, 35) stammender elektrischer Energie zu dem mindestens einen Stoff, und
   wobei das System (100) so ausgebildet ist, dass ein konstanter Energiefluss aus dem ersten und/oder zweiten Stromnetz (15, 35) in die Umwandlungseinrichtung (30) erreicht werden kann.
Aspekt 2:
   System nach Aspekt 1, wobei dieses:
   e) mindestens eine Stromerzeugungsanlage (40), und
   f) mindestens ein der Stromerzeugungsanlage (40) zugeordnetes zweites Stromnetz (35) aufweist.
Aspekt 3:
   System nach Aspekt 1 oder 2, wobei das System (100) mindestens eine Stromregelungseinrichtung (70) aufweist.
Aspekt 4:
   System nach Aspekt 2 oder 3, wobei die mindestens eine Stromerzeugungsanlage (40) eine Windkraft oder Photovoltaikanlage ist.
Aspekt 5:
   System nach einem der vorhergehenden Aspekte, wobei das System (100) so ausgebildet ist, dass ein Energiefluss vom zweiten Stromnetz (35) in das erste Stromnetz (15) stattfinden kann.
Aspekt 6:
   System nach einem der vorhergehenden Aspekte, wobei der aus dem zweiten Stromnetz (35) stammende Energiefluss mittels eines aus dem ersten Stromnetz (15) stammenden Energiefluss verstetigt wird.
Aspekt 7:
   System nach einem der vorhergehenden Aspekte, wobei die Umwandlungseinrichtung (30) mindestens eine Elektrolyseanlage (50) umfasst.
Aspekt 8:
   System nach einem der vorhergehenden Aspekte, wobei das System (100) so ausgebildet ist, dass der konstante Energiefluss aus dem ersten und/oder zweiten Stromnetz (15, 35) in die Elektrolyseanlage (50) der Umwandlungseinrichtung (30) erreicht werden kann.
Aspekt 9:
   System nach einem der vorhergehenden Aspekte, wobei die Umwandlungseinrichtung (30) mindestens einen Umsetzungsreaktor (60) umfasst.
Aspekt 10:
   System nach einem der vorhergehenden Aspekte, wobei die KWK-Anlage (10) einen Dampferzeuger und eine mit einem elektrischen Generator wirkverbundene Dampfturbine aufweist, wobei der Dampferzeuger mit der Dampfturbine wirkverbunden ist, wobei ein Dampfstrom von dem Dampferzeuger durch die Dampfturbine so steuerbar ist, dass der aus dem zweiten Stromnetz (35) stammende Energiefluss mittels eines durch den elektrischen Generator bereitgestellten Energiefluss verstetigt wird.
Aspekt 11:
   System nach einem der vorhergehenden Aspekte, wobei das System (100) so ausgebildet ist, dass unabhängig von dem Energiefluss aus dem ersten und/oder zweiten Stromnetz ein konstanter Wirkungsgrad der KWK-Anlage (10) von mindestens 90% gewährleistet ist.
Aspekt 12:
   Verfahren zur Herstellung mindestens eines Stoffes aus mindestens einem Ausgangsmaterial mittels elektrischer Energie, wobei das mindestens eine Ausgangsmaterial einer Umwandlungseinrichtung (30) eines Systems (100) nach einem der Aspekte 1 bis 11 zugeführt, in dieser umgesetzt und der mindestens eine Stoff hergestellt wird.
Aspekt 13:
   Verfahren nach Aspekt 12, wobei mindestens eines der Ausgangsmaterialien aus Biomaterial, insbesondere Stärke, Zucker oder Getreide, hergestellt ist.
Aspekt 14:
   Verfahren nach einem der Aspekte 12 oder 13, wobei mindestens eines der Ausgangsmaterialien durch Fermentation mindestens eines Biomaterials hergestellt wird.
Aspekt 15:
   Verfahren nach einem der Aspekte 12 bis 14, wobei das mindestens eine Ausgangsmaterial CO₂, Wasser oder beides ist.
Aspekt 16:
   Verfahren nach einem der vorhergehenden Aspekte 12 bis 15, wobei der mindestens eine hergestellte Stoff Methanol, Methan, Harnstoff, Ameisensäure, Ethanol, MTBE (Methyl-tert-butylether), DMC (Dimethylcarbonat), DME (Dimethylether) oder ein längerkettiger Kohlenwasserstoff ist.
Aspekt 17:
   Verfahren zum Betreiben einer Umwandlungseinrichtung (30) zur Umsetzung mindestens eines Ausgangsmaterials mittels elektrischer Energie zu mindestens einem Stoff, umfassend die folgenden Schritte:
   - Beziehen von elektrischer Energie aus wenigstens einem Stromnetz von zwei Stromnetzen (15, 35), wobei
   - ein erstes Stromnetz (15) einer KWK-Anlage (10) zugeordnet ist, wobei
   - ein zweites Stromnetz (35) einer Stromerzeugungsanlage (40) zugeordnet ist, wobei
   - ein Energiefluss aus den Stromnetzen (15, 35) zu der Umwandlungseinrichtung (30) so beeinflusst wird, dass
   - der Umwandlungseinrichtung (30) ein konstanter Energiefluss aus den Stromnetzen (15, 35)
   zugeführt wird, und wobei durch die Umwandlungseinrichtung (30) unter Zufuhr elektrischer Energie das mindestens eine Ausgangsmaterial zu dem wenigstens einem Stoff umgesetzt wird.
Aspekt 18:
   Verfahren nach Aspekt 17, wobei ein aus dem zweiten Stromnetz (35) stammender Energiefluss mittels eines aus dem ersten Stromnetz (15) stammenden Energieflusses verstetigt wird.
Aspekt 19: Verfahren nach Aspekt 17 oder 18, wobei der konstante Energiefluss aus den Stromnetzen (15, 35) einer Elektrolyseanlage (50) der Umwandlungseinrichtung (30) zugeführt wird.
Aspekt 20:
   Verfahren nach einem der vorhergehenden Aspekte 17 bis 19, wobei unabhängig von dem Energiefluss aus dem ersten und/oder zweiten Stromnetz die KWK-Anlage (10) so beeinflusst wird, dass ein konstanter Wirkungsgrad der KWK-Anlage von mindestens 90% vorliegt.

## Patentansprüche

1. System zur Herstellung mindestens eines Stoffes aus mindestens einem Ausgangsmaterial mittels elektrischer Energie umfassend:
a) mindestens eine Kraft-Wärme-Kopplungs(KWK)-Anlage (10),
b) mindestens ein der KWK-Anlage (10) zugeordnetes erstes Stromnetz (15),
c) mindestens eine Schnittstelle (20) zu einem zweiten Stromnetz (35),
d) eine Umwandlungseinrichtung (30), die mit dem ersten und zweiten Stromnetz (15, 35) wirkverbindbar ist, wobei die Umwandlungseinrichtung (30) ausgebildet ist zur Umsetzung des mindestens einen Ausgangsmaterials mittels aus dem ersten und/oder zweiten Stromnetz (15, 35) stammender elektrischer Energie zu dem mindestens einen Stoff, und
wobei das System (100) so ausgebildet ist, dass mittels mindestens einer Stromregelungseinrichtung (70) ein konstanter Energiefluss aus dem ersten und/oder zweiten Stromnetz (15, 35) in die Umwandlungseinrichtung (30) erreicht werden kann.

2. System nach Anspruch 1, wobei dieses:
e) mindestens eine Stromerzeugungsanlage (40), und
f) mindestens ein der Stromerzeugungsanlage (40) zugeordnetes zweites Stromnetz (35) aufweist.

3. System nach Anspruch 2, wobei die mindestens eine Stromerzeugungsanlage (40) eine Windkraft- oder Photovoltaikanlage ist.

4. System nach einem der vorhergehenden Ansprüche, wobei das System (100) so ausgebildet ist, dass ein Energiefluss vom zweiten Stromnetz (35) in das erste Stromnetz (15) stattfinden kann.

5. System nach einem der vorhergehenden Ansprüche, wobei der aus dem zweiten Stromnetz (35) stammende Energiefluss mittels eines aus dem ersten Stromnetz (15) stammenden Energieflusses mittels der mindestens einen Stromregelungseinrichtung (70) verstetigt wird.

6. System nach einem der vorhergehenden Ansprüche, wobei die Umwandlungseinrichtung (30) mindestens eine Elektrolyseanlage (50) umfasst.

7. System nach einem der vorhergehenden Ansprüche, wobei das System (100) so ausgebildet ist, dass der konstante Energiefluss aus dem ersten und/oder zweiten Stromnetz (15, 35) in die Elektrolyseanlage (50) der Umwandlungseinrichtung (30) mittels der mindestens einen Stromregelungseinrichtung (70) erreicht werden kann.

8. System nach Anspruch 6, wobei die Umwandlungseinrichtung (30) mindestens einen Umsetzungsreaktor (60) umfasst.

9. System nach einem der vorhergehenden Ansprüche, wobei die KWK-Anlage (10) einen Dampferzeuger und eine mit einem elektrischen Generator wirkverbundene Dampfturbine aufweist, wobei der Dampferzeuger mit der Dampfturbine wirkverbunden ist, wobei ein Dampfstrom von dem Dampferzeuger durch die Dampfturbine so steuerbar ist, dass der aus dem zweiten Stromnetz (35) stammende Energiefluss mittels eines durch den elektrischen Generator bereitgestellten Energiefluss über die mindestens eine Stromregelungseinrichtung (70) verstetigt wird.

10. Verfahren zum Betreiben einer Umwandlungseinrichtung (30) eines Systems (100) nach einem der Ansprüche 1 bis 9 zur Umsetzung mindestens eines Ausgangsmaterials mittels elektrischer Energie zu mindestens einem Stoff, umfassend die folgenden Schritte:
- Beziehen von elektrischer Energie aus wenigstens einem Stromnetz von zwei Stromnetzen (15, 35), wobei
- ein erstes Stromnetz (15) einer KWK-Anlage (10) zugeordnet ist, wobei
- ein zweites Stromnetz (35) einer Stromerzeugungsanlage (40) zugeordnet ist, wobei
- ein Energiefluss aus den Stromnetzen (15, 35) zu der Umwandlungseinrichtung (30) mittels der mindestens einen Stromregelungseinrichtung so beeinflusst wird, dass
- der Umwandlungseinrichtung (30) ein konstanter Energiefluss aus den Stromnetzen (15, 35) zugeführt wird, und
- wobei durch die Umwandlungseinrichtung (30) unter Zufuhr elektrischer Energie das mindestens eine Ausgangsmaterial zu dem wenigstens einem Stoff umgesetzt wird.

11. Verfahren nach Anspruch 10, wobei mindestens eines der Ausgangsmaterialien aus Biomaterial, insbesondere Stärke, Zucker oder Getreide, hergestellt ist.

12. Verfahren nach einem der Ansprüche 10 oder 11, wobei mindestens eines der Ausgangsmaterialien durch Fermentation mindestens eines Biomaterials hergestellt wird.

13. Verfahren nach einem der Ansprüche 10 bis 12, wobei das mindestens eine Ausgangsmaterial CO₂, Wasser oder beides ist.

14. Verfahren nach einem der vorhergehenden Ansprüche 10 bis 13, wobei der mindestens eine hergestellte Stoff Methanol, Methan, Harnstoff, Ameisensäure, Ethanol, MTBE (Methyl-tert-butylether), DMC (Dimethylcarbonat), DME (Dimethylether) oder ein längerkettiger Kohlenwasserstoff ist.

15. Verfahren nach einem der Ansprüche 10 bis 14, wobei ein aus dem zweiten Stromnetz (35) stammender Energiefluss mittels eines aus dem ersten Stromnetz (15) stammenden Energieflusses verstetigt wird.

16. Verfahren nach einem der Ansprüche 10 bis 15, wobei der konstante Energiefluss aus den Stromnetzen (15, 35) einer Elektrolyseanlage (50) der Umwandlungseinrichtung (30) zugeführt wird.

## Claims

1. System for producing at least one substance from at least one starting material using electrical energy, comprising:
a) at least one combined heat and power (CHP) system (10),
b) at least one first power grid (15) assigned to the CHP system (10),
c) at least one interface (20) to a second power grid (35),
d) a conversion device (30), which can be operatively connected to the first and second power grid (15, 35), the conversion device (30) being formed to convert the at least one starting material into the at least one substance using electrical energy from the first and/or second power grid (15, 35), and
wherein the system (100) is formed in such a way that a constant flow of energy from the first and/or second power grid (15, 35) into the conversion device (30) can be achieved using at least one current control device (70).

2. System according to claim 1, wherein said system has
e) at least one current generation system (40) and
f) at least one second power grid (35) assigned to the current generation system (40).

3. System according to claim 2, wherein the at least one current generation system (40) is a wind power system or photovoltaic system.

4. System according to any one of the preceding claims, wherein the system (100) is formed in such a way that a flow of energy from the second power grid (35) into the first power grid (15) can occur.

5. System according to any one of the preceding claims, wherein the flow of energy from the second power grid (35) is stabilised using the at least one current control device (70), using a flow of energy from the first power grid (15).

6. System according to any one of the preceding claims, wherein the conversion device (30) comprises at least one electrolysis system (50).

7. System according to any one of the preceding claims, wherein the system (100) is formed in such a way that the constant flow of energy from the first and/or second power grid (15, 35) into the electrolysis system (50) of the conversion device (30) can be achieved using the at least one current control device (70).

8. System according to claim 6, wherein the conversion device (30) comprises at least one transformation reactor (60).

9. System according to any one of the preceding claims, wherein the CHP system (10) has a steam generator and a steam turbine operatively connected to an electrical generator, the steam generator being operatively connected to the steam turbine, a flow of steam from the steam generator through the steam turbine being controllable in such a way that the flow of energy from the second power grid (35) is stabilised by way of the at least one current control device (70), using a flow of energy provided by the electrical generator.

10. Method for operating a conversion device (30) of a system (100) according to any one of claims 1 to 9 for converting at least one starting material into at least one substance using electrical energy, comprising the following steps:
- drawing electrical energy from at least one power grid out of two power grids (15, 35),
- a first power grid (15) being assigned to a CHP system (10),
- a second power grid (35) being assigned to a current generation system (40),
- a flow of energy from the power grids (15, 35) to the conversion device (30) being influenced using the at least one current control device in such a way that
- a constant flow of energy from the power grids (15, 35) is supplied to the conversion device (30), and
- the at least one starting material being converted into the at least one substance by the conversion device (30) as electrical energy is supplied.

11. Method according to claim 10, wherein at least one of the starting materials is produced from biomaterial, in particular starch, sugar or grains.

12. Method according to any one of claims 10 or 11, wherein at least one of the starting materials is produced by fermenting at least one biomaterial.

13. Method according to any one of claims 10 to 12, wherein the at least one starting material is CO₂, water or both.

14. Method according to any one of preceding claims 10 to 13, wherein the at least one produced substance is methanol, methane, urea, formic acid, ethanol, MTBE (methyl tert-butyl ether), DMC (dimethyl carbonate), DME (dimethyl ether) or a long-chain hydrocarbon.

15. Method according to any one of claims 10 to 14, wherein a flow of energy from the second power grid (35) is stabilised using a flow of energy from the first power grid (15).

16. Method according to any one of claims 10 to 15, wherein the constant flow of energy from the power grids (15, 35) is supplied to an electrolysis system (50) of the conversion device (30).

## Revendications

1. Système de fabrication d'au moins une substance à partir d'au moins un matériau de départ au moyen d'énergie électrique comprenant :
a) au moins une installation de cogénération (10),
b) au moins un premier réseau électrique (15) associé à l'installation de cogénération (10),
c) au moins une interface (20) vers un second réseau électrique (35),
d) un dispositif de conversion (30), qui peut être relié opérationnellement avec les premier et second réseaux électriques (15, 35), dans lequel le dispositif de conversion (30) est conçu pour la conversion de l'au moins un matériau de départ au moyen d'énergie électrique provenant des premier et/ou second réseaux électriques (15, 35) pour donner au moins une substance, et
le système (100) étant conçu de telle manière qu'un flux d'énergie constant à partir des premier et/ou second réseaux électriques (15, 35) peut être atteint dans le dispositif de conversion (30) au moyen d'au moins un dispositif de régulation du courant (70).

2. Système selon la revendication 1, celui-ci présentant :
e) au moins une installation de génération de courant (40), et
f) au moins un second réseau électrique (35) associé à l'installation de génération de courant (40).

3. Système selon la revendication 2, dans lequel l'au moins une installation de génération de courant (40) est une installation d'énergie éolienne ou photovoltaïque.

4. Système selon l'une des revendications précédentes, ledit système (100) étant conçu de telle manière qu'un flux d'énergie peut se produire à partir du second réseau électrique (35) vers le premier réseau électrique (15).

5. Système selon l'une des revendications précédentes, dans lequel le flux d'énergie provenant du second réseau électrique (35) est rendu pérenne au moyen de l'au moins un dispositif de régulation de courant (70).

6. Système selon l'une des revendications précédentes, dans lequel le dispositif de conversion (30) comprend au moins une installation d'électrolyse (50).

7. Système selon l'une des revendications précédentes, ledit système (100) étant conçu de telle manière que le flux d'énergie constant provenant des premier et second réseaux électriques (15, 35) dans l'installation d'électrolyse (50) du dispositif de conversion (30) peut être atteint au moyen de l'au moins un dispositif de régulation du courant (70).

8. Système selon la revendication 6, dans lequel le dispositif de conversion (30) comprend au moins un réacteur de conversion (60).

9. Système selon l'une des revendications précédentes, dans lequel l'installation de cogénération (10) présente un générateur de vapeur et une turbine à vapeur reliée à un générateur électrique, dans lequel le générateur de vapeur est relié opérationnellement avec la turbine à vapeur, dans lequel un flux de vapeur provenant du générateur de vapeur est réglable par la turbine à vapeur de sorte que le flux d'énergie provenant du second réseau électrique (35) est rendu pérenne au moyen d'un flux d'énergie fourni par le générateur électrique par le biais de l'au moins un dispositif de régulation du courant (70).

10. Procédé de mise en œuvre d'un dispositif de conversion (30) d'un système (100) selon l'une des revendications 1 à 9 pour la conversion d'au moins un matériau de départ au moyen d'énergie électrique pour donner au moins une substance, comprenant les étapes suivantes :
- la réception d'énergie électrique à partir d'au moins un réseau électrique parmi deux réseaux électriques (15, 35), dans lequel
- un premier réseau électrique (15) est associé à une installation de cogénération (10), dans lequel
- un second réseau électrique (35) est associé à une installation de génération de courant (40), dans lequel
- un flux d'énergie provenant des réseaux électriques (15, 35) vers le dispositif de conversion (30) est influencé de telle manière au moyen de l'au moins un dispositif de régulation de courant
- qu'un flux d'énergie constant provenant des réseaux électriques (15, 35) est mené vers le dispositif de conversion (30), et
- dans lequel, moyennant un apport d'énergie électrique, l'au moins un matériau de départ est converti pour donner l'au moins une substance par le dispositif de conversion (30).

11. Procédé selon la revendication 10, dans lequel au moins un des matériaux de départ est fabriqué à partir d'un biomatériau, notamment d'amidon, de sucre ou d'une céréale.

12. Procédé selon l'une des revendications 10 ou 11, dans lequel au moins un des matériaux de départ est fabriqué par une fermentation d'au moins un biomatériau.

13. Procédé selon l'une des revendications 10 à 12, dans lequel l'au moins un matériau de départ est du CO₂, de l'eau ou les deux.

14. Procédé selon l'une des revendications précédentes 10 à 13, dans lequel l'au moins une substance fabriquée est du méthanol, du méthane, de l'urée, de l'acide formique, de l'éthanol, du MTBE (méthyl tertio butyl éther), du DMC (carbonate de diméthyle), du DME (diméthyléther) ou un hydrocarbure à longue chaîne.

15. Procédé selon l'une des revendications 10 à 14, dans lequel un flux d'énergie provenant du second réseau électrique (35) est rendu pérenne au moyen d'un flux d'énergie provenant du premier réseau électrique (15).

16. Procédé selon l'une des revendications 10 à 15, dans lequel le flux d'énergie constant est mené à partir des réseaux électriques (15, 35) vers une installation d'électrolyse (50) du dispositif de conversion (30).
